# FASCICULE DE BREVET EUROPEEN

(11) **EP 4 469 251 B1**
(45) Date de publication et mention de la délivrance du brevet: **30.09.2026**
(21) Numéro de dépôt: 23701569.8
(22) Date de dépôt: 27.01.2023
(51) Int. Cl.: B26D 7/06, B26F 3/00, B65G 15/12, B65G 15/60

(54) **CONVOYEUR POUR MACHINE DE DECOUPE PAR JET D'EAU**
FÖRDERER FÜR EINE WASSERSTRAHLSCHNEIDMASCHINE
CONVEYOR FOR A WATER JET CUTTING MACHINE

(30) Priorité: 28.01.2022 FR 2200783
(43) Date de publication de la demande: 04.12.2024
(73) Titulaire: Hydroprocess, 71100 Chalon sur Saone (FR)
(72) Inventeur: DEREIMS, Philippe, 71100 CHALON SUR SAONE (FR)
(74) Mandataire: Gauche, Raynald André
(86) Numéro de dépôt international: PCT/EP2023/051992
(87) Numéro de publication internationale: WO 2023/144298

(56) Documents cités:
- EP-A1- 1 197 307
- DE-A1- 2 801 526

## Description

### Domaine technique de l'invention

La présente invention concerne le domaine général des machines de découpe par jet d'eau de produits, par exemple alimentaires, comprenant un convoyeur pour déplacer lesdits produits à découper sous la buse de la machine de découpe par jet d'eau.

### Etat de la technique

Dans le domaine de la découpe de produits notamment alimentaires, il est connu d'utiliser des machines de découpe par jet d'eau constituées d'un châssis sur lequel sont montés un plateau de chargement mobile ou non en forme de grille et supportant les produits à découper, et une tête de coupe mobile constituée par une buse et solidaire soit d'un chariot se déplaçant selon un mouvement de translation longitudinale ou transversale, soit de l'extrémité libre d'un bras pivotant autour d'un axe vertical au-dessus dudit plateau ; ledit chariot ou bras étant actionné par des moteurs électriques ou analogues.

Ce type de machines de de découpe par jet d'eau est certes performant, mais il présente l'inconvénient de nécessiter l'utilisation d'un plateau de chargement et, par conséquent, de rendre impossible la découpe en continu des produits, puisqu'il est nécessaire de retirer ledit plateau de chargement afin de retirer les produits découpés et de remettre sur ce dernier de nouveaux produits à découper. Ce type de machines de de découpe par jet d'eau n'est donc pas facilement compatible avec une automatisation du déplacement des produits à découper.

Pour pallier en partie cet inconvénient, il existe des convoyeurs pour déplacer des produits à découper sous la buse d'une machine de découpe par jet d'eau, ce type de convoyeurs étant constitué par une bande sans fin en mailles métalliques supportant les produits à découper et étant tendue entre deux rouleaux dont l'un est associé à un moyen d'entrainement afin de mettre en mouvement ladite bande sans fin pour déplacer lesdits produits à découper.

Bien qu'efficace, ce type de convoyeurs présente l'inconvénient majeur de mouiller de façon importante les produits à découper à cause des rebonds du jet d'eau sur les mailles métalliques de la bande sans fin, ce qui n'est pas acceptable pour des produits du type alimentaire.

Pour déplacer des produits à découper, il est également connu d'utiliser des convoyeurs tels que ceux décrits dans la demande de brevet allemand DE 28 01 526 ou dans la demande de brevet européen EP 1 197 307 A1, qui divulgue une machine de découpe selon le préambule de la revendication 1.

### Résumé de l'invention

Le but de la présente invention est donc de proposer un convoyeur pour déplacer des produits à découper sous la buse d'une machine de découpe par jet d'eau, facile à mettre en œuvre et à nettoyer tout en garantissant un résultat optimal, c'est-à-dire une découpe nette sans humidité excessive sur les produits découpés, le convoyeur permettant une automatisation aisée du déplacement des produits à découper et donc de la découpe en continu desdits produits.

Conformément à l'invention, il est proposé une machine de découpe comportant au moins une buse d'où sort selon une direction D verticale un jet de liquide à haute pression et un convoyeur permettant de déplacer des produits P à découper sous ledit jet de liquide à haute pression et comportant au moins une pluralité de boucles sans fin de largeur L et d'épaisseur E disposées parallèlement entre elles et tendues entre deux rouleaux d'entrainement de manière à déterminer chacune un brin supérieur et un brin inférieur, chaque boucle comprenant au moins deux parois longitudinales et étant disposée pour que les parois longitudinales d'au moins une partie des brins supérieur et inférieur soient perpendiculaires à la direction D, remarquable en ce que le convoyeur comporte au moins deux organes de guidage associés à au moins chacune des boucles et disposés entre les deux rouleaux d'entrainement, ces deux organes de guidage permettent de vriller le brin supérieur de la au moins une boucle associée de sorte que ses parois longitudinales soient, entre lesdits deux organes de guidage, parallèles à ladite direction D.

Chaque organe de guidage comporte avantageusement deux galets cylindriques disposés de part et d'autre de la boucle associée de sorte à être écartés l'un par rapport à l'autre d'une distance d légèrement supérieure à l'épaisseur E de la boucle associée, chaque galet cylindrique étant monté fixe ou pivotant autour d'un axe appartenant à un plan perpendiculaire à l'axe de rotation des rouleaux d'entrainement.

Les deux galets cylindriques sont de préférence montés chacun fixe ou pivotant autour d'un axe parallèle à la direction D

Selon un autre mode de réalisation, chaque organe de guidage comporte un rouleau cylindrique monté pivotant autour d'un axe perpendiculaire à la direction D et parallèle à l'axe de rotation des rouleaux d'entrainement et muni d'une pluralité de gorges radiales recevant chacune une boucle, chaque gorge radiale présente une largeur d légèrement supérieure à la largeur E de la boucle associée.

Selon un autre mode de réalisation, le convoyeur est associé à un convoyeur d'entrée permettant d'amener les produits P à découper sur ledit convoyeur et/ou un convoyeur de sortie permettant d'évacuer les produits P découpés dudit convoyeur, chaque convoyeur d'entrée ou de sortie comportant une pluralité courroies sans fin disposées parallèlement entre elles et tendues entre au moins un rouleau cylindrique monté pivotant autour d'un axe perpendiculaire à la direction D du jet sortant de la buse et parallèle à l'axe de rotation des rouleaux d'entrainement des boucles, et l'un des organes de guidage dudit convoyeur de manière à déterminer chacune un brin supérieur et un brin inférieur, au moins lesdits brins supérieurs des courroies étant disposés sur le rouleau cylindrique de l'organe de guidage correspondant entre les boucles.

Chaque boucle peut avantageusement être vrillée de sorte qu'elle soit en contact avec la paroi externe d'un des rouleaux d'entrainement par l'une de ses parois longitudinales et en contact avec la paroi externe de l'autre rouleau d'entrainement par l'autre de ses parois longitudinales.

Selon un autre mode de réalisation, chaque boucle est vrillée à la façon d'un anneau de Moebius.

Chaque boucle comporte avantageusement au moins un biseau le long du bord longitudinal d'une de ses parois longitudinales qui est en regard du jet sortant de la buse entre lesdits deux organes de guidage.

De manière préférée, chaque boucle comporte un biseau le long du bord longitudinal de chacune de ses parois longitudinales qui est en regard du jet sortant de la buse entre lesdits deux organes de guidage.

Le convoyeur comporte avantageusement des moyens de tension ajustable de chaque boucle permettant d'obtenir, au moyen d'un actionneur une tension prédéterminée, adaptée et constante en fonctionnement de chaque boucle et, au contraire, une détente rapide de ladite boucle en vue de leur remplacement.

La machine de découpe comporte avantageusement un réceptacle en forme d'entonnoir disposé à l'aplomb de la buse et entre les brins supérieur et inférieur des boucles permettant la récupération et l'évacuation des effluents de coupe durant la phase de coupe.

### Brève description des figures

D'autres avantages et caractéristiques ressortiront mieux de la description qui va suivre d'un mode d'exécution de l'invention, en référence à la figure annexée sur laquelle :
[Fig 1] est une vue schématique de côté d'une machine de découpe conforme à l'invention avec un convoyeur pour déplacer des produits à découper sous la buse de la machine de découpe par jet d'eau,
[Fig 2] est une vue schématique du dessus du convoyeur de la figure 1,
[Fig 3] est une vue schématique d'un organe de guidage du convoyeur de la figure 1,
[Fig 4] est une vue schématique en perspective d'une boucle du convoyeur de la figure 1,
[Fig 5] est une vue schématique de côté d'un deuxième mode de réalisation de l'invention,
[Fig 6] est une vue schématique du dessus du convoyeur de la figure 3,
[Fig 7] est une vue schématique d'un organe de guidage du convoyeur de la figure 3,
[Fig 8] est une vue schématique de côté d'un troisième mode de réalisation de l'invention,
[Fig 9] est une vue schématique du dessus du convoyeur de la figure 8.

### Description des modes de réalisation

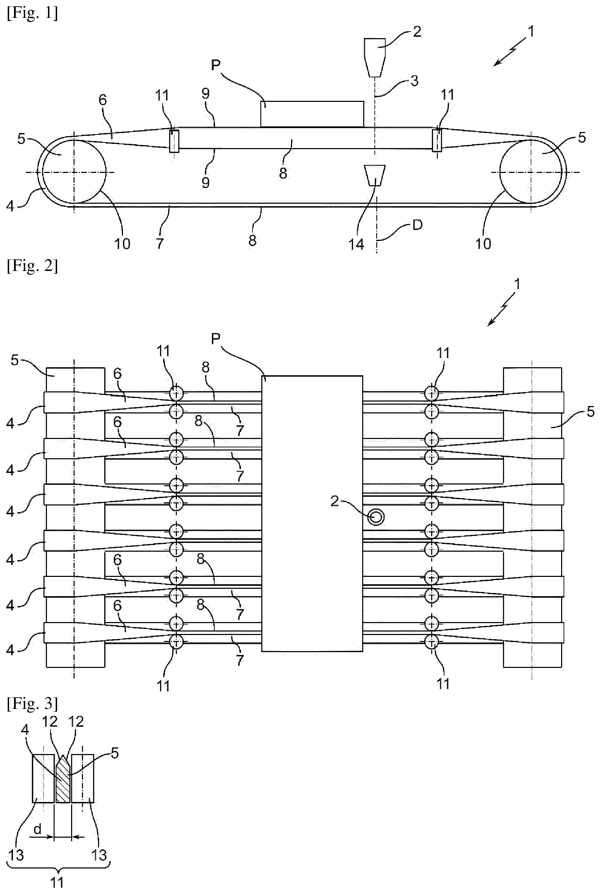

En référence aux figures 1 à 3, on a représenté, de façon schématique partielle un convoyeur 1 pour déplacer des produits P à découper sous au moins une buse 2 d'une machine de découpe par jet de liquide, classiquement de l'eau, ladite machine de découpe n'étant pas représentée afin de ne pas surcharger les figures. Un jet 3 de liquide à haute pression sort de ladite buse 2 selon une direction D verticale.

Par ailleurs, sur les figures, on n'a représenté qu'une seule buse 2, mais il va de soi que la machine de de découpe associée au convoyeur 1 selon l'invention peut comporter plusieurs buses 2.

Ledit convoyeur 1 comporte une pluralité de boucles 4 sans fin disposées parallèlement entre elles et tendues entre deux rouleaux d'entrainement 5 cylindriques.

En référence à la figure 3, chacune de ces boucles 4 détermine, entre les deux rouleaux d'entrainement 5, un brin supérieur 6 et un brin inférieur 7 s'étendant respectivement au-dessus et en dessous desdits deux rouleaux d'entrainement 5. Par ailleurs, chaque boucle 4 a une section transversale en forme générale de rectangle dont les longueur et largeur déterminent respectivement la largeur L et l'épaisseur E de la boucle 4, cette dernière comportant alors deux parois longitudinales 8 reliées par deux parois latérales 9.

En référence aux figures 1 à 2, chaque boucle 4 est disposée sur l'un de ses flancs au moins au niveau de chacun desdits rouleaux d'entrainement 4, c'est-à-dire que l'une de ses parois longitudinales 8 est en contact avec la paroi externe 10 desdits rouleaux d'entrainement 5. Les parois longitudinales 8 d'au moins une partie des brins supérieur 6 et inférieur 7 sont alors perpendiculaires à la direction D du jet 3 de liquide à haute pression sortant de la buse 2.

On désigne ici par "en forme générale de rectangle" le fait que la section transversale de chaque boucle 3 ne soit pas limitée à la forme stricte d'un rectangle, les angles de ladite section transversale pourront ne pas être uniquement des angles droits mais être arrondis ou chanfreinés ou biseautés, sans sortir du cadre de la présente invention.

En outre, on désigne ici par "parallèles" le fait que des éléments ou parties d'éléments du convoyeur 1 selon l'invention font un angle entre eux compris entre 0 et 20°. De même, on désigne ici par "perpendiculaires" le fait que des éléments ou parties d'éléments dudit convoyeur 1 font un angle entre eux compris entre 70° et 110°.

Le convoyeur 1 selon l'invention comporte en outre au moins deux organes de guidage 11 associés à au moins chacune des boucles 4 et disposés entre les deux rouleaux d'entrainement 5. Ces deux organes de guidage 11 permettent de vriller de 90° le brin supérieur 6 de la au moins une boucle 4 associée de sorte qu'entre lesdits deux organes de guidage 11 ledit brin supérieur 6 soit orienté sur son chant, c'est-à-dire que ses parois longitudinales 8 soient, entre lesdits deux organes de guidage 11, parallèles à la direction D du jet 3 de liquide sortant de la buse 2.

Dans cette configuration, on peut alors disposer le ou les produits P à découper sur le dessus des brins supérieurs des boucles 4 entre lesdits deux organes de guidage 11. Ainsi, lorsque les rouleaux d'entrainement 5 se mettent en mouvement, ils entrainent chaque boucle 4 et déplacent le ou les produits P à découper sous la buse 2 entre lesdits deux organes de guidage 11, afin de procéder à la découpe par le jet 3 desdits produits P.

On comprend bien qu'avec cette configuration, on peut réaliser une automatisation en continu de la découpe des produits P en associant, directement ou par le biais d'autre convoyeurs classiquement du type à rouleaux, aux extrémités du convoyeur 1 des postes pour la préparation des produits P à découper et pour l'emballage des produits P découpés.

Par ailleurs, le fait de vriller de 90° le brin supérieur 6 de chaque boucle 4 permet d'avoir un appui stable des produits P à découper, sans risque d'endommager les boucle 4 puisque qu'entre lesdits deux organes de guidage 11 le brin supérieur 6 de cette dernière est disposée sur le chant, de manière à avoir une paroi la plus étroite, à savoir l'une de ses parois latérales 9, en regard du jet 3 sortant de la buse 2.

Par ailleurs, pour limiter encore l'impact du jet d'eau sortant de la buse 2 sur le brin supérieur 5 entre lesdits deux organes de guidage 11, chaque boucle 4 comporte au moins un biseau 12 le long du bord longitudinal d'une de ses parois longitudinales 8 qui est en regard du jet 3 sortant de la buse 2 entre lesdits deux organes de guidage 11. De préférence, chaque boucle 3 comporte un biseau 12 le long du bord longitudinal de parois longitudinales 8 qui est en regard du jet 3 sortant de la buse 2 entre lesdits deux organes de guidage 11 (Cf. figure 3).

En référence aux figures 1 à 3, chaque organe de guidage 11 comporte deux galets cylindriques 13 disposés de part et d'autre de la boucle 4 associée de sorte à être écartés l'un par rapport à l'autre d'une distance d légèrement supérieure à l'épaisseur E de la boucle 4 associée de manière à permettre le passage du brin supérieur 6 de la boucle 4 et à maintenir ledit brin supérieur 6 sur son chant entre lesdits deux organes de guidage 11. Les deux galets cylindriques 13 sont montés chacun pivotant autour d'un axe parallèle à la direction D du jet 3 sortant de la buse 2, l'axe de chacun desdits deux galets cylindriques 13 appartenant à un plan perpendiculaire à l'axe de rotation des rouleaux d'entrainement 5. La hauteur des galets cylindriques 13 est avantageusement inférieure ou égale à la largeur 1 de chaque boucle 4.

Les axes desdits deux galets cylindriques 13 pourront ne pas être parallèles à la direction D du jet 3 sortant de la buse 2, mais inclinés par rapport à cette dernière, sans sortir de la présente invention.

L'Homme du Métier n'aura aucune difficulté à déterminer les dimensions et la position relative des galets cylindriques 13 en fonction des dimensions de chaque boucle 4.

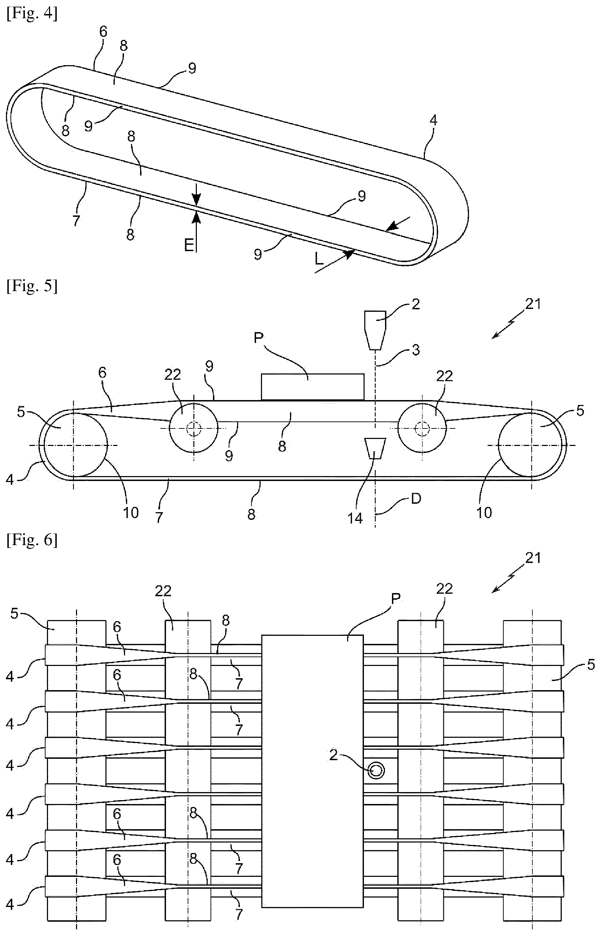

Sur les figures 5 à 7, on a représenté un convoyeur 21 selon un deuxième de réalisation de l'invention. Ce convoyeur 11 diffère du convoyeur 1 précédemment décrit uniquement en ce qu'il comporte des organes de guidage 22 différents des organes de guidage 11 précédemment décrits. Ainsi, chaque organe de guidage 22 comporte un rouleau cylindrique 23 monté pivotant autour d'un axe perpendiculaire à la direction D du jet 3 sortant de la buse 2 et au sens de déplacement des boucles 4 et muni d'une pluralité de gorges radiales 24 recevant chacune une boucle 4. On comprend bien que dans la configuration décrite, l'axe de rotation de chaque un rouleau cylindrique 23 est également parallèle à l'axe de rotation des rouleaux d'entrainement 5. Chaque gorge radiale 24 présente une largeur d légèrement supérieure à la largeur E de la boucle 4 associée de manière à permettre le passage du brin supérieur 6 de la boucle 4 et à maintenir la portion 12 dudit brin supérieur 6 sur son chant. La profondeur de chaque gorge radiale 24 est avantageusement inférieure ou égale à la largeur L de chaque boucle 4.

Sur les figures 5 à 7, on a représenté chaque organe de guidage 22 du convoyeur 21 comportant un rouleau 23 cylindrique muni d'une pluralité de gorges radiales 24, mais il va de soi que, sans sortir du cadre de la présente invention, chaque organe de guidage 22 pourra comporter une pluralité de rouleaux cylindriques disposés coaxialement les uns à la suite des autres et munis chacun d'une ou plusieurs gorges radiales 24.

L'Homme du Métier n'aura aucune difficulté à déterminer les dimensions des gorges radiales 24 en fonction des dimensions de chaque boucle 4.

Même si pour des raisons de limitation des frottements et donc de l'usure, il est préférable que les galets cylindriques 13 et rouleaux cylindriques 23 soient montés pivotants, il va de soi que lesdits galets cylindriques 13 et rouleaux cylindriques 23 pourront être montés fixes, sans sortir du cadre de la présente invention.

Le convoyeur 1, 21 comporte, de manière avantageuse, des moyens de tension ajustable, non représentés, de chaque boucle 4 permettant d'obtenir, au moyen d'un actionneur tel que, par exemple, un vérin pneumatique ou un vérin hydraulique, une tension prédéterminée, adaptée et constante en fonctionnement de chaque boucle 4 et, au contraire, une détente rapide de ladite boucle 4 en vue de leur remplacement.

Par ailleurs, contrairement à la figure 4, chaque boucle 4 peut être vrillée lors de son montage de sorte qu'elle soit en contact avec la paroi externe 10 d'un des rouleaux d'entrainement 5 par l'une de ses parois longitudinales 8 e en contact avec la paroi externe 10 de l'autre rouleau d'entrainement 5 par l'autre de ses parois longitudinales 8.

De même, selon un autre mode de réalisation, chaque boucle 4 peut être vrillée lors de sa fabrication à la façon d'un anneau de Moebius.

On comprend bien que le convoyeur 1, 21 selon l'invention peut non seulement être utilisé pour translater de manière continue des produits P à découper sous le jet 3 de liquide à haute pression de la buse 2, mais il pourra également participer à la découpe desdits produits P en leur faisant faire des aller-retours sous ledit jet 3, notamment dans le cas d'une buse 2 ne se déplaçant que selon une direction transversale aux boucles 4.

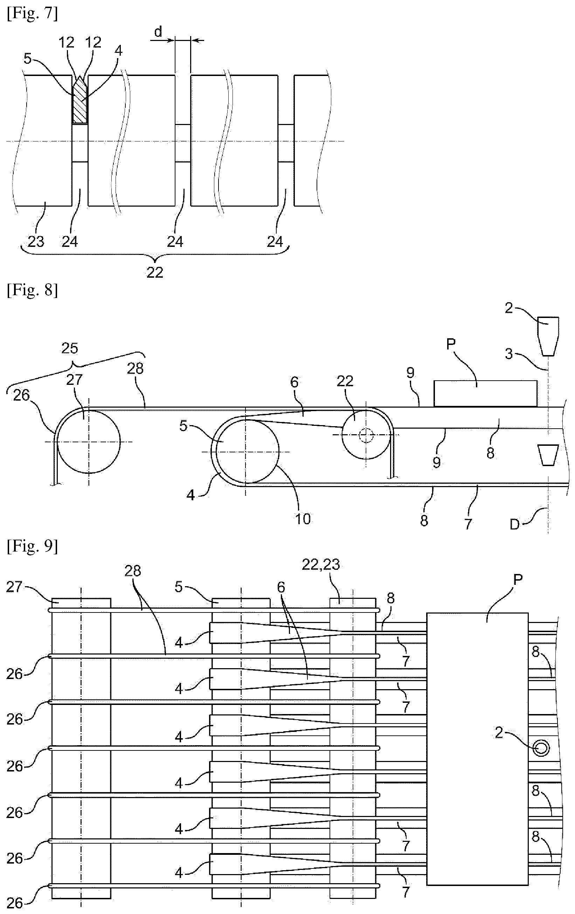

Selon un troisième mode de réalisation représenté aux figures 8 et 9, le convoyeur 21 des figures 5 à 7 peut être associé à un convoyeur d'entrée 25 permettant d'amener les produits P à découper sur ledit convoyeur 21 et/ou un convoyeur de sortie permettant d'évacuer les produits P découpés dudit convoyeur 21. Chaque convoyeur d'entrée 25 ou de sortie comporte une pluralité courroies 26 sans fin disposées parallèlement entre elles et tendues entre au moins un rouleau cylindrique 27 monté pivotant autour d'un axe perpendiculaire à la direction D du jet 3 sortant de la buse 2 et parallèle à l'axe de rotation des rouleaux d'entrainement 5 des boucles 4 du convoyeur 21, et l'un des organes de guidage 22 dudit convoyeur 21 de manière à déterminer chacune un brin supérieur 28 et un brin inférieur, au moins lesdits brins supérieurs 28 des courroies étant disposés sur le rouleau cylindrique 23 de l'organe de guidage 22 correspondant entre lesdites boucles 4. De manière avantageuse, les courroies 26 ont une section transversale circulaire. Avec cette configuration particulière, on comprend bien que le convoyeur d'entrée 25 ou de sortie sera parfaitement synchronisé au convoyeur 21, facilitant ainsi la transition avec un autre convoyeur amont ou aval, car la zone avant ou après la zone où les boucles 4 sont vrillées verticalement n'étant pas particulièrement stable du fait du vrillage progressif.

Enfin, la machine de découpe associée au convoyeur 1, 21 comporte avantageusement un réceptacle 14 avantageusement en forme d'entonnoir disposé à l'aplomb de la buse 2 et entre les brins supérieur 6 et inférieur 7 des boucles 4 afin de pas endommager ledit brin inférieur 7, ledit réceptacle 14 étant classiquement raccordé en partie basse à une tuyauterie non représentée, avantageusement souple, permettant l'évacuation des effluents de coupe durant la phase de coupe.

Enfin, il va de soi que les exemples de convoyeur 1, 21 de l'invention qui viennent d'être décrits ne sont que des illustrations particulières, en aucun cas limitatives de l'invention, dont l'étendue de protection est définie par les revendications en annexe.

## Revendications

1. Machine de découpe comportant au moins une buse (2) d'où sort selon une direction D verticale un jet (3) de liquide à haute pression et un convoyeur (1, 21) permettant de déplacer des produits (P) à découper sous ledit jet (3) de liquide à haute pression et comportant au moins une pluralité de boucles (4) sans fin de largeur L et d'épaisseur E disposées parallèlement entre elles et tendues entre deux rouleaux d'entrainement (5) de manière à déterminer chacune un brin supérieur (6) et un brin inférieur (7), chaque boucle (4) comprenant au moins deux parois longitudinales (8) et étant disposée pour que les parois longitudinales (8) d'au moins une partie des brins supérieur (6) et inférieur (7) soient perpendiculaires à la direction D, **caractérisée en ce que** le convoyeur (1, 21) comporte au moins deux organes de guidage (11, 22) associés à au moins chacune des boucles (4) et disposés entre les deux rouleaux d'entrainement (5), ces deux organes de guidage (11, 22) permettent de vriller le brin supérieur (6) de la au moins une boucle (4) associée de sorte que ses parois longitudinales (8) soient, entre lesdits deux organes de guidage (11, 22), parallèles à ladite direction D.

2. Machine de découpe selon la revendication 1 **caractérisée en ce que** chaque organe de guidage (11) comporte deux galets cylindriques (13) disposés de part et d'autre de la boucle (4) associée de sorte à être écartés l'un par rapport à l'autre d'une distance d légèrement supérieure à l'épaisseur E de la boucle (4) associée, chaque galet cylindrique (13) étant monté fixe ou pivotant autour d'un axe appartenant à un plan perpendiculaire à l'axe de rotation des rouleaux d'entrainement (5).

3. Machine de découpe selon la revendication 2 **caractérisée en ce que** les deux galets cylindriques (13) sont montés chacun fixe ou pivotant autour d'un axe parallèle à la direction D.

4. Machine de découpe selon la revendication 1 **caractérisée en ce que** chaque organe de guidage (22) comporte un rouleau (23) cylindrique monté pivotant autour d'un axe perpendiculaire à la direction D et parallèle à l'axe de rotation des rouleaux d'entrainement (5) et muni d'une pluralité de gorges radiales (24) recevant chacune une boucle (4), chaque gorge radiale (24) présente une largeur d légèrement supérieure à la largeur E de la boucle (4) associée.

5. Machine de découpe selon la revendication 4 **caractérisée en ce que** le convoyeur (1, 21) est associé à un convoyeur d'entrée (25) permettant d'amener les produits (P) à découper sur ledit convoyeur (21) et/ou un convoyeur de sortie permettant d'évacuer les produits (P) découpés dudit convoyeur (21), chaque convoyeur d'entrée (25) ou de sortie comportant une pluralité courroies (26) sans fin disposées parallèlement entre elles et tendues entre au moins un rouleau cylindrique (27) monté pivotant autour d'un axe perpendiculaire à la direction D du jet (3) sortant de la buse (2) et parallèle à l'axe de rotation des rouleaux d'entrainement (5) des boucles (4) du convoyeur (21), et l'un des organes de guidage (22) dudit convoyeur (21) de manière à déterminer chacune un brin supérieur (28) et un brin inférieur, au moins lesdits brins supérieurs (28) des courroies étant disposés sur le rouleau cylindrique (23) de l'organe de guidage (22) correspondant entre lesdites boucles (4).

6. Machine de découpe selon l'une quelconque des revendications 1 à 5 **caractérisée en ce que** chaque boucle (4) est vrillée de sorte qu'elle soit en contact avec la paroi externe (10) d'un des rouleaux d'entrainement (5) par l'une de ses parois longitudinales (8) et en contact avec la paroi externe (10) de l'autre rouleau d'entrainement (5) par l'autre de ses parois longitudinales (8).

7. Machine de découpe selon l'une quelconque des revendications 1 à 6 **caractérisée en ce que** chaque boucle (4) est vrillée à la façon d'un anneau de Moebius.

8. Machine de découpe selon l'une quelconque des revendications 1 à 7 **caractérisée en ce que** chaque boucle (4) comporte au moins un biseau (12) le long du bord longitudinal d'une de ses parois longitudinales (8) qui est en regard du jet (3) sortant de la buse (2) entre lesdits deux organes de guidage (11).

9. Machine de découpe selon la revendication 8 **caractérisée en ce que** chaque boucle (4) comporte un biseau (12) le long du bord longitudinal de chacune de ses parois longitudinales (8) qui est en regard du jet (3) sortant de la buse (2) entre lesdits deux organes de guidage (11).

10. Machine de découpe selon l'une quelconque des revendications 1 à 9 **caractérisée en ce que** le convoyeur (1, 21) comporte des moyens de tension ajustable de chaque boucle (4) permettant d'obtenir, au moyen d'un actionneur une tension prédéterminée, adaptée et constante en fonctionnement de chaque boucle (4) et, au contraire, une détente rapide de ladite boucle (4) en vue de leur remplacement.

11. Machine de découpe selon l'une quelconque des revendications 1 à 10 **caractérisée en ce qu'**elle comporte un réceptacle (14) en forme d'entonnoir disposé à l'aplomb de la buse (2) et entre les brins supérieur (6) et inférieur (7) des boucles (4) permettant la récupération et l'évacuation des effluents de coupe durant la phase de coupe.

## Patentansprüche

1. Schneidemaschine, die mindestens eine Düse (2) umfasst, aus der in einer vertikalen Richtung D ein Hochdruck-Flüssigkeitsstrahl (3) austritt, und einen Förderer (1, 21), der es ermöglicht, unter dem Hochdruck-Flüssigkeitsstrahl (3) zu schneidende Produkte (P) zu bewegen, und der mindestens eine Vielzahl von Endlosschleifen (4) mit Breite L und Dicke E umfasst, die parallel zueinander angeordnet und zwischen zwei Antriebsrollen (5) so gespannt sind, dass sie jeweils ein Obertrum (6) und ein Untertrum (7) festlegen, wobei jede Schleife (4) mindestens zwei Längswände (8) enthält und so angeordnet ist, dass die Längswände (8) mindestens eines Teils des Obertrums (6) und des Untertrums (7) senkrecht zur Richtung D sind, **dadurch gekennzeichnet, dass** der Förderer (1, 21) mindestens zwei Führungselemente (11, 22) umfasst, die mindestens jeder der Schleifen (4) zugeordnet und zwischen den beiden Antriebsrollen (5) angeordnet sind, wobei diese beiden Führungselemente (11, 22) es ermöglichen, das Obertrum (6) der mindestens einen zugeordneten Schleife (4) so zu verdrehen, dass deren Längswände (8) zwischen den beiden Führungselementen (11, 22) parallel zur Richtung D verlaufen.

2. Schneidemaschine nach Anspruch 1, **dadurch gekennzeichnet, dass** jedes Führungselement (11) zwei zylindrische Rollen (13) umfasst, die auf beiden Seiten der zugehörigen Schleife (4) angeordnet sind, so dass sie einen Abstand d voneinander haben, der etwas größer ist als die Dicke E der zugehörigen Schleife (4), wobei jede zylindrische Rolle (13) fest oder schwenkbar um eine Achse montiert ist, die zu einer Ebene gehört, die senkrecht zur Drehachse der Antriebsrollen (5) gehört.

3. Schneidemaschine nach Anspruch 2, **dadurch gekennzeichnet, dass** die beiden zylindrische Rollen (13) jeweils fest oder schwenkbar um eine Achse parallel zur Richtung D montiert sind.

4. Schneidemaschine nach Anspruch 1, **dadurch gekennzeichnet, dass** jedes Führungselement (22) eine zylindrische Rolle (23) umfasst, die schwenkbar um eine Achse senkrecht zur Richtung D und parallel zur Drehachse der Antriebsrollen (5) montiert ist und mit einer Vielzahl von Radialnuten (24) versehen ist, die jeweils eine Schleife (4) aufnehmen, wobei jede Radialnut (24) eine Breite d aufweist, die etwas größer ist als die Breite E der zugehörigen Schleife (4).

5. Schneidemaschine nach Anspruch 4, **dadurch gekennzeichnet, dass** der Förderer (1, 21) mit einem Eingangsförderer (25) verbunden ist, der es ermöglicht, die zu schneidenden Produkte (P) auf den Förderer (21) zu bringen, und/oder mit einem Ausgangsförderer, das es ermöglicht, die geschnittenen Produkte (P) vom Förderer (21) abzutransportieren, wobei jeder Eingangs- (25) oder Ausgangsförderer eine Vielzahl von Endlosriemen (26) umfasst, die parallel zueinander angeordnet und zwischen mindestens einer zylindrischen Rolle (27), die schwenkbar um eine Achse senkrecht zur Richtung D des aus der Düse (2) austretenden Strahls (3) und parallel zur Drehachse der Antriebsrollen (5) der Schleifen (4) des Förderers (21) montiert ist, und einem der Führungselemente (22) des Förderers (21) so gespannt sind, dass sie jeweils ein Obertrum (28) und ein Untertrum festlegen, wobei mindestens die Obertrume (28) der Riemen auf der zylindriche Rolle (23) des entsprechenden Führungselements (22) zwischen den Schleifen (4) angeordnet sind.

6. Schneidemaschine nach einem der Ansprüche 1 bis 5, **dadurch gekennzeichnet, dass** jede Schleife (4) so verdreht ist, dass sie durch eine ihrer Längswände (8) mit der Außenwand (10) einer der Antriebsrollen (5) und durch die andere ihrer Längswände (8) mit der Außenwand (10) der anderen Antriebsrolle (5) in Kontakt steht.

7. Schneidemaschine nach einem der Ansprüche 1 bis 6, **dadurch gekennzeichnet, dass** jede Schleife (4) wie ein Möbiusring verdreht ist.

8. Schneidemaschine nach einem der Ansprüche 1 bis 7, **dadurch gekennzeichnet, dass** jede Schleife (4) mindestens eine Fase (12) entlang der Längskante einer ihrer Längswände (8) umfasst, die dem aus der Düse (2) zwischen den beiden Führungselementen (11) austretenden Strahl (3) gegenüberliegt.

9. Schneidemaschine nach Anspruch 8, **dadurch gekennzeichnet, dass** jede Schleife (4) eine Fase (12) entlang der Längskante jeder ihrer Längswände (8) umfasst, die dem aus der Düse (2) zwischen den beiden Führungselementen (11) austretenden Strahl (3) gegenüberliegt.

10. Schneidemaschine nach einem der Ansprüche 1 bis 9, **dadurch gekennzeichnet, dass** der Förderer (1, 21) einstellbare Spannmittel für jede Schleife (4) umfasst, die es ermöglichen, mittels eines Stellglieds eine vorbestimmte, angepasste und konstante Spannung im Betrieb jeder Schleife (4) und umgekehrt eine schnelle Entspannung der Schleife (4) zum Zwecke ihres Austauschs zu erhalten.

11. Schneidemaschine nach einem der Ansprüche 1 bis 10, **dadurch gekennzeichnet, dass** sie einen trichterförmigen Behälter (14) umfasst, der senkrecht zur Düse (2) und zwischen dem Obertrum (6) und dem Untertrum (7) der Schleifen (4) angeordnet ist und die Rückgewinnung und den Abtransport des Schneideabwassers während der Schneidphase ermöglicht.

## Claims

1. Cutting machine comprising at least one nozzle (2) from which a jet (3) of high-pressure liquid exits in a vertical direction D and a conveyor (1, 21) making it possible to move products (P) to be cut under said jet (3) of high-pressure liquid and comprising at least a plurality of endless loops (4) of width L and thickness E arranged parallel to each other and tensioned between two drive rollers (5) so as to each determine an upper strand (6) and a lower strand (7), each loop (4) comprising at least two longitudinal walls (8) and being arranged so that the longitudinal walls (8) of at least a portion of the upper (6) and lower (7) strands are perpendicular to the direction D, **characterised in that** the conveyor (1, 21) comprises at least two guiding members (11, 22) associated with at least each of the loops (4) and disposed between the two drive rollers (5), these two guiding members (11, 22) allow the upper strand (6) of the at least one associated loop (4) to be twisted so that its longitudinal walls (8) are, between said two guiding members (11, 22), parallel to said direction D.

2. Cutting machine according to claim 1, **characterised in that** each guiding member (11) comprises two cylindrical rollers (13) arranged on either side of the associated loop (4) so as to be spaced apart from one another by a distance d slightly greater than the thickness E of the associated loop (4), each cylindrical roller (13) being mounted in a state fixed or pivoting about an axis belonging to a plane perpendicular to the axis of rotation of the drive rollers (5).

3. Cutting machine according to claim 2, **characterised in that** the two cylindrical rollers (13) are each mounted in a state fixed or pivoting about an axis parallel to the direction D.

4. Cutting machine according to claim 1, **characterised in that** each guiding member (22) comprises a cylindrical roller (23) mounted for pivoting about an axis perpendicular to the direction D and parallel to the axis of rotation of the drive rollers (5) and provided with a plurality of radial grooves (24) each receiving a loop (4), each radial groove (24) has a width d slightly greater than the width E of the associated loop (4).

5. Cutting machine according to claim 4, **characterised in that** the conveyor (1, 21) is associated with an inlet conveyor (25) making it possible to bring the products (P) to be cut onto said conveyor (21) and/or an outlet conveyor making it possible to discharge the products (P) cut from said conveyor (21), each inlet conveyor (25) or outlet conveyor comprising a plurality of endless belts (26) arranged parallel to each other and tensioned between at least one cylindrical roller (27) mounted for pivoting about an axis perpendicular to the direction D of the jet (3) exiting the nozzle (2) and parallel to the axis of rotation of the drive rollers (5) of the loops (4) of the conveyor (21), and one of the guiding members (22) of said conveyor (21) so as to each determine an upper strand (28) and a lower strand, at least said upper strands (28) of the belts being disposed on the cylindrical roller (23) of the corresponding guiding member (22) between said loops (4).

6. Cutting machine according to any one of claims 1 to 5, **characterised in that** each loop (4) is twisted so that it is in contact with the outer wall (10) of one of the drive rollers (5) by one of its longitudinal walls (8) and in contact with the outer wall (10) of the other drive roller (5) by the other of its longitudinal walls (8).

7. Cutting machine according to any one of claims 1 to 6, **characterised in that** each loop (4) is twisted in the manner of a Moebius strip.

8. Cutting machine according to any one of claims 1 to 7, **characterised in that** each loop (4) includes at least one bevel (12) along the longitudinal edge of one of its longitudinal walls (8) which is facing the jet (3) exiting the nozzle (2) between said two guiding members (11).

9. Cutting machine according to claim 8, **characterised in that** each loop (4) includes a bevel (12) along the longitudinal edge of each of its longitudinal walls (8) which is facing the jet (3) exiting the nozzle (2) between said two guiding members (11).

10. Cutting machine according to any one of claims 1 to 9, **characterised in that** the conveyor (1, 21) comprises adjustable tension means of each loop (4) allowing, by means of an actuator, a predetermined, adapted and constant operating tension of each loop (4) to be obtained and, on the contrary, a rapid slackening of said loop (4) with a view to replacing them.

11. Cutting machine according to any one of claims 1 to 10, **characterised in that** it comprises a funnel-shaped receptacle (14) arranged vertically relative to the nozzle (2) and between the upper (6) and lower (7) strands of the loops (4) allowing the recovery and discharge of the cutting waste during the cutting phase.
